(19) **Europäisches Patentamt / European Patent Office / Office européen des brevets**

(11) **EP 3 018 808 B1**

(12) **EUROPEAN PATENT SPECIFICATION**

(45) Date of publication and mention
of the grant of the patent:
**02.01.2019 Bulletin 2019/01**

(51) Int Cl.:
**H02M 3/155** *(2006.01)*     **H02M 3/158** *(2006.01)*
**H02M 7/539** *(2006.01)*     **H01F 27/00** *(2006.01)*
**F25B 49/02** *(2006.01)*     **H01F 27/32** *(2006.01)*
**H02M 1/00** *(2006.01)*

(21) Application number: **13888830.0**

(22) Date of filing: **02.07.2013**

(86) International application number:
**PCT/JP2013/068164**

(87) International publication number:
**WO 2015/001619 (08.01.2015 Gazette 2015/01)**

(54) **POWER CONVERSION DEVICE, AND COOLING AIR CONDITIONING DEVICE**

LEISTUNGSWANDLER UND KÜHLENDE KLIMAANLAGE

DISPOSITIF DE CONVERSION D'ÉNERGIE ET DISPOSITIF DE CONDITIONNEMENT D'AIR DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2016 Bulletin 2016/19**

(73) Proprietor: **Mitsubishi Electric Corporation Tokyo 100-8310 (JP)**

(72) Inventors:
• **ARISAWA, Koichi**
  **Tokyo 100-8310 (JP)**
• **SHIMOMUGI, Takuya**
  **Tokyo 100-8310 (JP)**
• **YAMAKAWA, Takashi**
  **Tokyo 100-8310 (JP)**
• **UEMURA, Keisuke**
  **Tokyo 100-8310 (JP)**

• **MATSUBARA, Noriyuki**
  **Tokyo 100-8310 (JP)**
• **KUSUBE, Shinsaku**
  **Tokyo 100-8310 (JP)**
• **YUASA, Kenta**
  **Tokyo 100-8310 (JP)**
• **TSUMURA, Akihiro**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
**EP-A2- 1 717 826      WO-A1-2012/120600
WO-A1-2012/120600      WO-A1-2012/137258
JP-A- H11 288 830      JP-A- 2012 009 710
US-A- 4 947 311      US-A1- 2007 115 088
US-A1- 2010 231 342      US-A1- 2013 152 624**

**Description**

Technical Field

The present invention relates to a power conversion device and a refrigeration air-conditioning apparatus.

Background Art

As variable voltage/variable frequency inverter devices or other devices have been put into practical use, application areas for various power conversion devices have been developed.

For example, regarding power conversion devices, application technologies for voltage boosting/dropping converters have been actively developed in recent years. On the other hand, development of wide band-gap semiconductor elements such as those made of silicon carbide materials have been actively conducted. Regarding such novel elements, those elements that have a small current capacity (allowable value for effective current value) though having a high breakdown voltage have been put into practical uses mainly in the field of rectifiers (for example, see Patent Literature 1). WO 2012/137258 A1 discloses a power conversion apparatus, a motor drive apparatus, and a refrigeration air-conditioning apparatus. The power conversion apparatus is provided with a rectifying circuit, which rectifies a voltage of an alternative current power supply; a smoothing means, which smoothes an output voltage transmitted from the rectifying circuit; a short-circuiting means, which is disposed on the side further toward the alternating current power supply side than tha smoothing means, and controls a current and/or a voltage by short-circuiting the alternative current power supply; a reactor, which is disposed on the side further toward the alternating current power supply side than th e short-circuit means; one or a plurality of reverse flow preventing elements, which eliminate a current reverse flow from the load side to the alternating current power supply side; a commutation means for performing commutation operations of making the current flow in another path connected in parallel to the reverse flow preventing elements; an abnormality detecting means for detecting an abnormality of the commutation means; and a switching control means, which controls operations for the commutating means, corresponding to the detection performed by the abnormality detecting means.

Citation List

Patent Literature

Patent Literature 1: Japanese Unexamined Patent Application Publication No. 2005-160284 (Fig. 1)

Summary of Invention

Technical Problem

On the other hand, to put a high-efficiency novel element to a practical use, there are many problems to be solved to realize such practical use. And it is considered to take still more time to make them widely used particularly in power conversion devices that convert power to be supplied to a motor for a compressor of an air-conditioning apparatus. Accordingly, there is an example in which recovery current generated in a rectifier is reduced by providing an apparatus (circuit) to commutate part of the current flowing through the rectifier into a separate path. While providing such apparatus allows significant reduction of recovery current, it is possible to further reduce the recovery current by improving the properties of instruments on the separate path.

In view of the above described problems, the present invention is intended to provide a power conversion device or other apparatus that can ensure high efficiency and high reliability etc. And the present invention is also intended to further reduce losses relating to power conversion.

Solution to Problem

The object of the present invention is solved by a power conversion device according to independent claim 1. Advantageous embodiments are described by the dependent claims.

A power conversion device relating to the present invention is a power conversion device configured to convert electric power from a power source to a load. The power conversion device includes a voltage varying device including a rectification unit configured to prevent backflow of a current from a side of the load to a side of the power source, the voltage changing device being configured to change a voltage of power from the power source to a predetermined voltage, and a commutation device including a transformer and configured to perform commutation operation, in the commutation operation, the transformer applying a voltage induced by a current flowing through a primary-side winding to a secondary-side winding, which is on an other path different from that for the voltage changing device, wherein the transformer includes at least part of windings that are wound such that an inter-winding distance is uniform.

According to a power conversion device relating to the present invention, since a transformer having a secondary-side winding on a separate path is configured to include windings that are uniformly wound keeping a distance therebetween, inter-winding capacitance can be reduced, and thus it is possible to suppress losses due to passage of current on the separate path, while reducing recovery current.

Brief Description of Drawings

Fig. 1 is a diagram to represent a system configuration including, as a major component, a power conversion device relating to Embodiment 1 of the present invention.

Fig. 2 is a diagram to illustrate a configuration example of a commutation device 4 relating to Embodiment 1 of the present invention.

Fig. 3 is a diagram to illustrate a path of recovery current during reverse recovery of a boost rectification unit 23 relating to Embodiment 1 of the present invention.

Fig. 4 is a diagram to illustrate a path of recovery current during reverse recovery of a commutation rectification unit 42 relating to Embodiment 1 of the present invention.

Fig. 5 is a diagram (no. 1) to illustrate an outline of the configuration of a transformer 41 relating to Embodiment 1 of the present invention.

Fig. 6 is a diagram (no. 2) to illustrate an outline of the configuration of the transformer 41 relating to Embodiment 1 of the present invention.

Fig. 7 is a diagram to represent an inter-winding capacitance relating to the secondary-side winding of the transformer 41 relating to Embodiment 1 of the present invention.

Fig. 8 is a diagram to illustrate the capacitance in a separate path relating to Embodiment 1 of the present invention.

Fig. 9 is a schematic diagram to illustrate winding interval of the secondary-side winding relating to Embodiment 1 of the present invention.

Fig. 10 is a diagram to illustrate the relationship of the winding layers in the transformer 41 relating to Embodiment 1 of the present invention.

Fig. 11 is a configuration diagram of a refrigeration air-conditioning apparatus relating to Embodiment 3 of the present invention.

Description of Embodiments

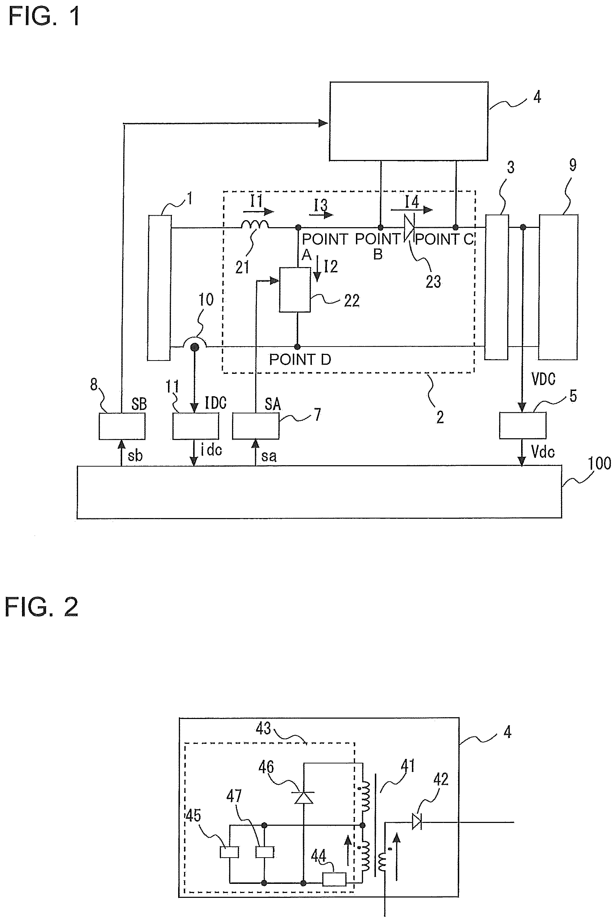

Hereafter, power conversion devices relating to an embodiment of the present invention will be described with reference to the drawings. In the following drawings including Fig. 1, components given the same symbol are same or equivalent components, and are considered to be common throughout the entirety of the description of embodiments to be presented below. Further, the forms of components represented in the entirety of the specification are merely examples, and the present invention will not be limited to the forms described in the description. Particularly, combinations of components will not be limited to combinations in each embodiment, and a component according to an embodiment can be applied to other embodiments. Further, regarding a plurality of instruments of the same kind discriminated by a subscript, they may be presented omitting the subscript when there is no need of particularly distinguishing or determining them. Moreover, the relationship of sizes between respective components in the drawing may be different from that in reality.

Embodiment 1

Fig. 1 is a drawing to illustrate the system configuration including, as a major component, a power conversion device relating to Embodiment 1 of the present invention. To begin with, the configuration of a system including a power conversion device that can perform high efficiency power conversion will be described based on Fig. 1.

In the system illustrated in Fig. 1, a power conversion device is connected between a power source 1 and a load 9. As the power source 1, various power supplies such as a DC power source, a single-phase power source, and a 3-phase power source may be used. Herein, description will be made assuming that the power source 1 is a DC power source. Moreover, the load 9 is supposed to be a motor, an inverter device connected to the motor, or other devices.

The power conversion device includes a voltage boosting device (voltage boosting circuit) 2, a commutation device (commutation circuit) 4, and a smoothing device (smoothing circuit) 3. The voltage boosting device 2, which serves as a voltage varying device, boosts the applied voltage relating to power supply from the power source 1 to a predetermined voltage. The commutation device 4 commutates the current flowing through the voltage boosting device 2 to a different path (separate path) at desired timing. The smoothing device 3 smooths the voltage (output voltage) relating to the operation of the voltage boosting device 2 and the commutation device 4.

The voltage boosting device 2 in the present embodiment is made up of a magnetic energy storage unit 21 made up of, for example, a reactor connected to the positive side or negative side of the power source 1, a boost open/close switch unit (power varying open/close switch) 22 connected to the subsequent stage thereof, and a boost rectification unit (power varying rectification unit) 23 made up of a rectifier or other devices. Where, as illustrated in Fig. 1, regarding the rectifier making up the boost rectification unit 23, it is supposed that the anode thereof is on the side of B point and the cathode thereof is on the side of C point. For example, the boost open/close switch unit 22 having a switching element performs the open/close operation based on a drive signal SA from a drive signal transmission device 7 to control conduction and non-conduction between the positive side and the negative side of the power source 1 via the boost open/close switch unit 22. Although, the type of the semiconductor element to be used as the switching element is not particularly limited, a high breakdown voltage element (for example, IGBT (insulated gate bipolar transistor), MOSFET (metal-oxide semiconductor field-effect transistor), etc.) that can endure power supply from the power source 1 is used. Where, though not illustrated in Fig. 1, the boost open/close switch unit 22 receives supply of power for performing open/close operation from a power source for switching operation. Moreover, the boost rectification unit 23 made up of, for example, a rectifier such as a p-n junction diode, etc. is a backflow preventing element that rectifies current from the power source 1 side to the load 9 side, and prevents backflow from the load 9 side to the power source 1 side. In the present embodiment, a rectifier having a larger current capacity is to be used in accordance with the magnitude of power supplied from the power source 1 to the load 9. Moreover, to suppress power (energy) loss in the boost rectification unit 23, rectification is performed by using an element having a low forward voltage (excellent Vf characteristics). An apparatus at least including the boost rectification unit 23, which is a backflow preventing element, and the commutation device 4 serves as a backflow preventing device for preventing backflow from the load 9 side to the power source 1 side. Where, although the boost rectification unit 23 of the voltage boosting device 2 is supposed to be a backflow preventing element, the backflow preventing device can be constructed using another element as the backflow preventing element.

Fig. 2 is a diagram to illustrate a configuration example of a commutation device 4 relating to Embodiment 1 of the present invention. The commutation device 4 of the present embodiment is made up of a transformer 41, a commutation rectification unit 42, and elements for making up a transformer drive circuit 43 for driving the transformer 41. In Fig. 2, the primary-side and secondary-side windings are assumed to have the same polarity. And the secondary-side winding of the transformer 41 and the commutation rectification unit 42 are connected in series. Further, the commutation rectification unit 42 is connected in parallel with the boost rectification unit 23 of the voltage boosting device 2.

The transformer 41 including a pulse transformer, etc. makes up, together with the transformer drive circuit 43, a commutation device. The current flowing through the voltage boosting device 2 is commutated by applying a voltage on the primary-side winding to cause flow of excitation current, thereby inducing voltage on the secondary-side winding to cause flow of current therethrough. For example, in the transformer 41, by adjusting turns ratio, ratio of inductance, etc. between the primary-side winding and the secondary-side winding, it is made possible to generate a voltage (about several volts) not less than voltage required for reverse recovery of the boost rectification unit 23 (rectifier) while suppressing excess voltage. Thus, this makes it possible to perform reverse recovery without applying excessive current through the commutation device 4 side, thus achieving energy saving in a simple manner. Moreover, the transformer 41 of the present embodiment is provided with a reset winding in the primary-side winding. Providing the reset winding makes allows regeneration of excitation energy on the side of the transformer power source unit 45 at the time of resetting, thereby making it possible to recover power and thus achieve further higher efficiency. The transformer 41 will be described in more detail below.

The commutation rectification unit 42 rectifies the current relating to commutation (current flowing through a separate path). Where, the commutation rectification unit 42 includes a rectifier including a semiconductor element that is excellent in electric characteristics (particularly, recovery characteristics) and has a smaller current capacity and a short reverse recovery time. Regarding the rectifier, since it is located on the path for the power supplied from the power source 1 to the load 9, an element having a high breakdown voltage is used for it. Therefore, particularly, an element made up of a silicon schottky-barrier diode having excellent recovery characteristics, or a wide band-gap semiconductor made of SiC (silicon carbide), GaN (gallium nitride), diamond, etc. is used for the rectifier of the commutation rectification unit 42.

Moreover, in the present embodiment, the transformer drive circuit 43 is made up of a commutation switch 44, a transformer power source unit 45, a transformer drive rectification unit 46, and a transformer smoothing unit 47. The commutation switch 44 including, for example, a switching element such as transistors performs open/close operation based on a commutation signal SB from a commutation signal transfer device 8, and controls supply and shut-off of the power from the transformer power source unit 45 to the transformer 41 (primary-side winding). Where, the switching element may include an insulation portion for isolating the gate side from the drain (collector)-source (emitter) side. In this case, the insulation portion may be made up of a photocoupler, a pulse transformer, etc. Providing the insulation portion makes it possible to electrically separate the commutation device 4 from the control side of a controller 100 such that excessive current will not flow to the control side. The transformer power source unit 45 serves as a power supply for supplying power to the transformer 41 to cause the commutation device 4 to perform commutation operation. Then, the voltage to be applied to the transformer 41 by the transformer power source unit 45 is adapted to be lower than the voltage (output voltage) to be applied to the smoothing device 3 by the voltage boosting device 2 and the commutation device 4. Where, although not particularly illustrated in Fig. 1, in consideration of countermeasure for noises, circuit protection at the time of malfunction, etc., a limiting resistor, a high-frequency capacitor, a snubber circuit, a protection circuit, etc. may be inserted as desired in the wiring path that connects the transformer power source unit 45, the commutation switch 44 and the primary-side winding of the transformer 41 with each other. Moreover, the transformer power source unit 45 may be made in common with a power supply for performing open/close operation of the boost open/close switch unit 22. The transformer drive rectification unit 46 rectifies the current flowing through the transformer drive circuit 43 and supplies power to the primary-side winding of the transformer 41. Moreover, the transformer smoothing unit 47 including a capacitor, etc., smooths the power from the transformer power source unit 45 to supply it to the primary-side winding. Providing the transformer smoothing unit 47 and performing smoothing makes it possible to, for example, suppress abrupt fluctuation of the transformer power source unit 45 and a sudden jump of current.

The smoothing device 3 is made up of, for example, a capacitor for smoothing, and smooths the voltage relating to the operation of the voltage boosting device 2 to apply it to the load 9. Moreover, the voltage detection device 5 detects voltage (load voltage to be applied to the load 9) smoothed by the smoothing device 3, and sends a converted signal Vdc to the controller 100. The voltage detection device 5 is made up of a level shift circuit by voltage dividing resistance. Where, the voltage detection device 5 may be added with an analog/digital converter, etc. such that its signal (data) can be subjected to computing processing, etc. by the controller 100.

Further, the system of the present embodiment includes a current detection element 10 and a current detection device 11. The current detection element 10 detects current at a connection point between the power source 1 and the negative side of the boost open/close switch unit 22. The current detection element 10 is made up of, for example, a current transformer, a shunt resistor, etc. The current detection device 11 includes an amplification circuit, a level shift circuit, a filtering circuit, etc. and converts current IDC relating to the detection of the current detection element 10 into a signal Idc that can be processed by the controller 100, and outputs the signal Idc. Where, when the controller 100 or other instruments can substitute for the current detection device 11 to perform the function being performed thereby, circuits can be appropriately omitted. Moreover, although the power conversion device of Fig. 1 includes the voltage detection device 5, the current detection element 10 and the current detection device 11, the controller 100 can perform signal generation and the like based on current or voltage relating to the detection. For this reason, the power conversion device may be configured to include only the voltage detection device 5, or only the current detection element 10 and the current detection device 11.

The controller 100 is made up of a computing device such as a microcomputer, and a digital signal processor; or any device in which similar functions to those of the computing device are built-in. In the present embodiment, for example, the controller 100 generates signals for instructions to operate the boost open/close switch unit 22 and the commutation switch 44 based on the voltage and current relating to the detection by the voltage detection device 5, the current detection element 10, and the current detection device 11, and controls the voltage boosting device 2 and the commutation device 4. Where, although not illustrated in Fig. 1, the controller 100 receives power supply for performing processing operation from the power source for controller operation. This power supply may be made in common with the transformer power source unit 45. Further, although the present embodiment is described as that the controller 100 controls the operation of the voltage boosting device 2 and the commutation device 4, this is not limiting. For example, two controllers may control the voltage boosting device 2 and the commutation device 4, respectively.

The drive signal transmission device 7 is made up of, for example, a buffer, a logic IC, a level shift circuit, etc. and converts a drive signal sa into a drive signal SA to transfer it to the voltage boosting device 2. However, for example, when the function thereof is built-in in the controller 100, it can be appropriately omitted. In that case, open/close operation of the boost open/close switch unit 22 may be directly performed with the drive signal sa sent by the controller 100 being as the drive signal SA. Moreover, the commutation signal transfer device 8, as well as the drive signal transmission device 7, is also made up of a buffer, a logic IC, a level shift circuit, etc. and converts a commutation signal sb into a commutation signal SB to transfer it to the commutation device 4. However, when for example, the function thereof is built-in in the controller 100, it can be appropriately omitted. In that case, open/close operation of the commutation switch 44 may be directly performed with the commutation signal sb sent by the controller 100 being as the drive signal SB. Hereafter, description will be made assuming that the drive signal SA is the same as the drive signal sa from the controller 100, and the commutation signal SB is the same as the commutation signal sb (for this reason, hereafter, the drive signal is denoted by sa, and the commutation signal by sb).

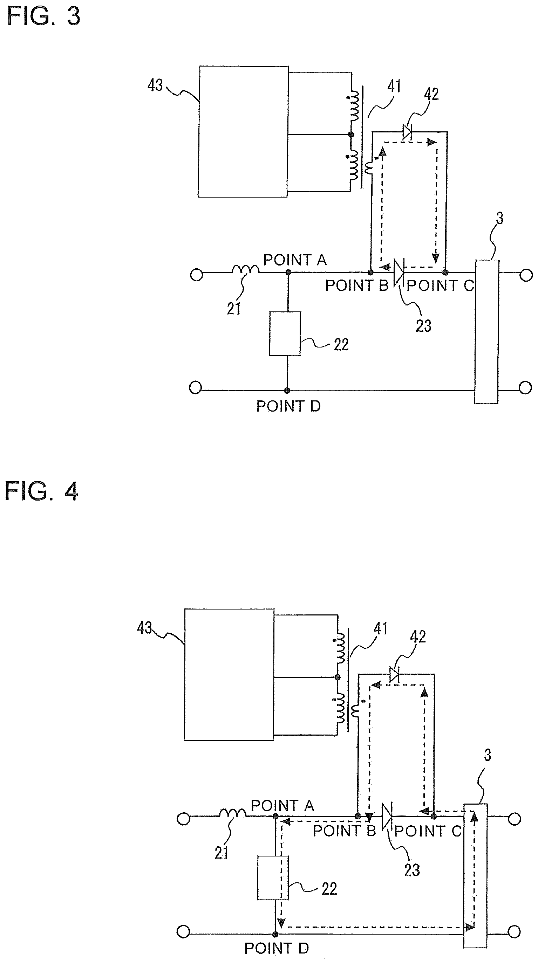

Fig. 3 is a diagram to illustrate a path of recovery current during reverse recovery of a boost rectification unit 23 relating to Embodiment 1 of the present invention. When the commutation signal sb is turned on from off, the recovery current during reverse recovery of the boost rectification unit 23 flows through the following path: the secondary-side winding of the transformer 41 (connection side with the commutation rectification unit 42) → the commutation rectification unit 42 → the boost rectification unit 23 → the secondary-side winding of the transformer 41 (point B side of Fig. 3).

Where, the voltage required to cause a current relating to reverse recovery of the boost rectification unit 23 to flow through the commutation device 4 depends on the voltage level of the transformer power source unit 45 of the commutation device 4. For example, when the transformer power source unit 45, like an external power source, etc., can supply power independently of the system, adjustment may be made on the transformer power source unit 45. On the other hand, due to system restrictions, there may be a case in which a power supply that produces necessary power within the system is preferably used. In such a case, for example, any output will be used, such as of a switched-mode power supply, etc. that is installed for the purpose of obtaining a power supply for controller in the system.

The reason why the commutation device 4 performs commutation operation is to suppress generation of recovery current in the boost rectification unit 23. Therefore, if voltage required for reverse recovery of the boost rectification unit 23 can be obtained, enabling a corresponding current to be flown, as the power relating to commutation operation that does not directly contribute to power conversion decreases, efficiency increases and thus more energy is saved. However, there may be a case in which the power supply is not necessarily able to apply an appropriate voltage in the operation of the commutation device 4. If a high voltage far greater than the voltage needed for reverse recovery of the boost rectification unit 23 is applied, and a current corresponding to the voltage is caused to flow, recovery loss will increase by a magnitude of power represented by the product between the voltage and the recovery current. Moreover, any attempt to cope with the problem by realizing multiple output of the switched-mode power supply such as by providing new output for applying an appropriate voltage may lead to a cost increase of the system.

Accordingly, in the present embodiment, the setting of the turns ratio, etc. is creatively contrived according to the voltage level of the transformer power source unit 45 such that an appropriate voltage and current are provided to the commutation device 4 side without waste in reverse recovery of the boost rectification unit 23.

The voltage relating to the secondary-side winding and the voltage relating to the primary-side winding are uniquely determined by the turns ratio and inductance ratio between the primary-side winding and the secondary-side winding of the transformer 41. Then, winding setting of the transformer 41 of the commutation device 4 may be performed in consideration of impedance of the circuit pattern, on-voltage of the switch, etc. such that an appropriate voltage needed for reverse recovery of the boost rectification unit 23 of the voltage boosting device 2 can be applied across the boost rectification unit 23. As a result of allowing an appropriate voltage to be applied to the commutation device 4 side, reverse recovery of the boost rectification unit 23 will not be performed at an unnecessarily high voltage, thus reducing losses.

Fig. 4 is a diagram to illustrate a path of recovery current during reverse recovery of the commutation rectification unit 42 relating to Embodiment 1 of the present invention. When the commutation signal sb is turned off from on, the recovery current will flow through the following path: the smoothing device 3 (positive side) → the commutation rectification unit 42 → the secondary-side winding of the transformer 41 → the boost open/close switch unit 22 → the smoothing device 3 (negative side).

As so far described, in the system of Embodiment 1, the commutation device 4 is provided in the power conversion device such that the current flowing through the voltage boosting device 2 is commutated to the smoothing device 3 side through a separate path. For example, the boost rectification unit 23 is caused to reversely recover before the boost open/close switch unit 22 is turned on. Then, a recovery current that flows as a result of the boost open/close switch unit 22 being turned on is caused to flow through the commutation rectification unit 42 in which the time relating to reverse recovery is short, exhibiting excellent recovery characteristics, not through the boost rectification unit 23 in which although forward voltage is low, a large amount of recovery current flows. As a result of this, it is possible to reduce the recovery current in the power conversion device. Moreover, when commutation operation is not performed (normal time), since current flows through the boost rectification unit 23 that has a low forward voltage, it is also possible to suppress losses during operation in power conversion of the voltage boosting device 2. For this reason, even if an element having a large current capacity is used as the boost rectification unit 23, it is possible to reduce recovery loss/distribution loss regardless the current capacity of the element and the recovery characteristics of the element in the voltage boosting device 2. Thus, it becomes possible to reduce losses caused by recovery current, and the amount of noise (level of noise terminal voltage/radiation noise, etc.) as the whole system.

Where, in the path during reverse recovery, the rectifier of the commutation rectification unit 42 can be regarded as an electrostatic capacitance component (that accumulates electric charge, and is hereafter referred to as a capacitance component). The recovery current primarily depends on reverse recovery charge of the commutation rectification unit 42. For this reason, using a rectifier having excellent characteristics (small electrostatic capacitance) for the commutation rectification unit 42 makes it possible to reduce the recovery current. However, as illustrated in Fig. 4, there is not only the commutation rectification unit 42, but also the secondary-side winding of the transformer 41 in the separate path. Each of the transformer 41 and the inter-winding capacitance acts as a capacitance component. Therefore, by reducing the inter-winding capacitance taking account of the inter-winding capacitance of the secondary-side winding of the transformer 41 in the separate path, it is possible to suppress losses caused by current flow through the separate path while reducing the recovery current.

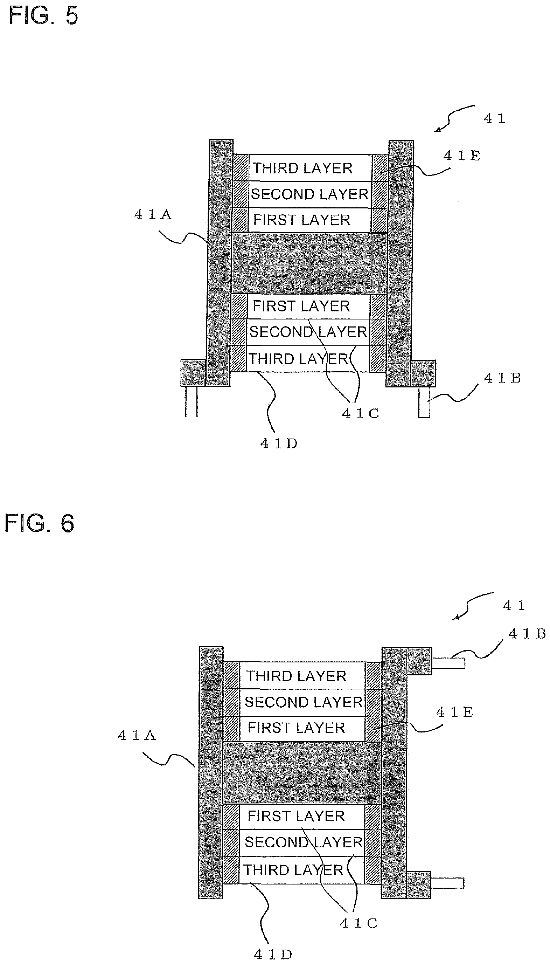

Figs. 5 and 6 are diagrams to illustrate an outline of the configuration of a transformer 41 relating to Embodiment 1 of the present invention. The transformer 41 of Fig. 5 and the transformer 41 of Fig. 4 differ in the position of a pin 41B for connecting the transformer 41 in a circuit. As illustrated in Figs. 5 and 6, the transformer 41 is constructed by performing winding on a bobbin 41A. Where, the winding forms a layer, and the transformer 41 of the present embodiment is provided with three winding layers by performing threefold winding on the bobbin 41A. Each layer is insulated from each other by an interlayer insulation tape 41C. Moreover, an outer layer insulation tape 41D is applied to the outer surface of the outermost winding layer aiming for insulation and protection of the windings. Further, a barrier tape 41E for filling a space between each winding and the bobbin 41A is applied. Where, although not illustrated in Figs. 5 and 6, the transformer 41 includes a core (ferrite, etc.) in the middle portion of the bobbin 41A. However, when a winding with an enhanced insulation function (such as triple insulated wire) is used as the winding, the barrier tape 41E not necessarily needs to be applied.

Next, the capacitance component relating to the transformer 41 will be described. Where, for the sake of simplicity, the capacitance between the primary-side winding and the reset winding, and the capacitance component of the path itself are neglected. Generally, an inter-winding capacitance C in a transformer can be represented by C = $\varepsilon \cdot S/d$, where d is inter-winding distance, S is winding sectional area, and $\varepsilon$ is permittivity.

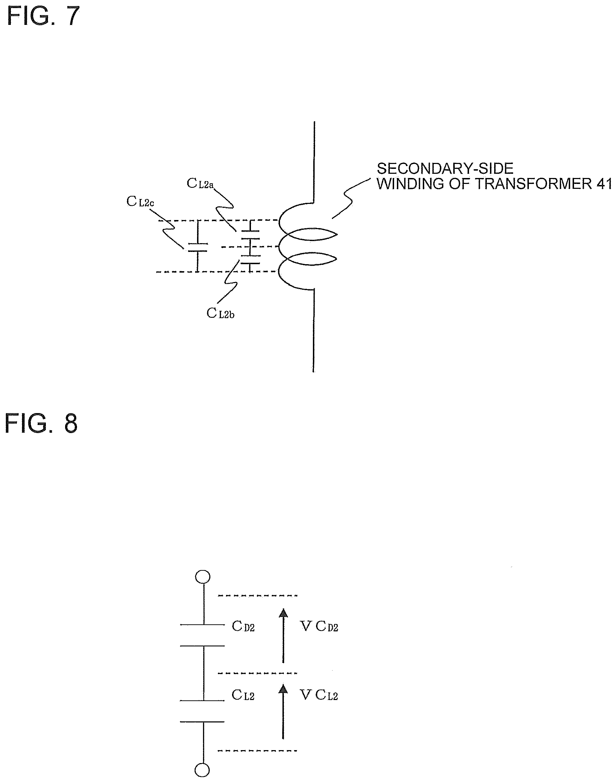

Fig. 7 is a diagram to represent an inter-winding capacitance relating to the secondary-side winding of the transformer 41 relating to Embodiment 1 of the present invention. As illustrated in Fig. 7, for example, inter-winding capacitances relating to the secondary-side winding of three turns are supposed to be $C_{L2a}$ (=C), $C_{L2b}$ (=C), and $C_{L2c}$ (=C/2). Thus, a combined inter-winding capacitance $C_{L2}$ can be represented by the following Formula (1). From Formula (1), it is seen that increasing the inter-winding distance d makes it possible to decrease the inter-winding capacitance $C_{L2}$.
[Expression 1]

$$C_{L2} = \frac{\dfrac{C_{L2a} \cdot C_{L2b}}{C_{L2a} + C_{L2b}} \cdot C_{L2c}}{\dfrac{C_{L2a} \cdot C_{L2b}}{C_{L2a} + C_{L2b}} + C_{L2c}} = \frac{C}{4} \qquad \cdots \ (1)$$

Fig. 8 is a diagram to illustrate the capacitance in a separate path relating to Embodiment 1 of the present invention. The capacitance component in a separate path during reverse recovery is roughly determined by the balance between the electrostatic capacitance $C_{D2}$ in the rectifier making up the commutation rectification unit 42 and the inter-winding capacitance (combined capacitance) $C_{L2}$. For example, it is given as $C_{D2} \cdot C_{L2}/(C_{D2}+C_{L2})$. As the inter-winding distance d increases, the inter-winding capacitance $C_{L2}$ decreases. Therefore, the numerator in $C_{D2} \cdot C_{L2}/(C_{D2}+C_{L2})$ increases and the denominator thereof decreases, making it possible to decrease the capacitance in a separate path during reverse recovery. This makes it possible to reduce losses due to recovery current in a separate path.

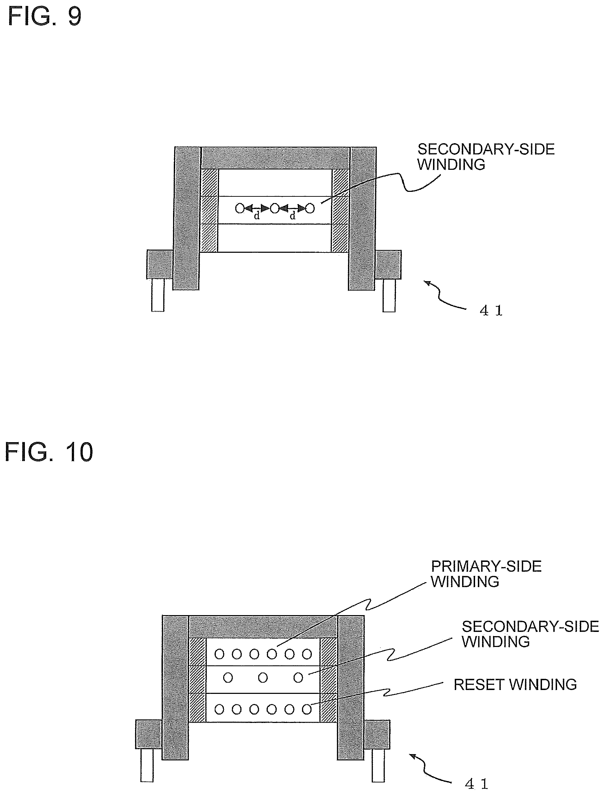

Fig. 9 is a schematic diagram to illustrate winding interval of the secondary-side winding relating to Embodiment 1 of the present invention. Fig. 9 illustrates one side portion of the winding wound around the bobbin 41A. As illustrated in Fig. 9, the secondary-side winding employs space winding in which windings are wound not in a closely spaced fashion, but keeping a substantially equal distance therebetween. Winding the windings by keeping a distance therebetween makes it possible to reduce losses relating to recovery current.

Fig. 10 is a diagram to illustrate the relationship of the winding layers in the transformer 41 relating to Embodiment 1 of the present invention. Fig. 10 illustrates the relationships of a winding layer of the primary-side winding, a winding layer of the secondary-side winding, and a winding layer of the reset winding. Fig. 10 illustrates one side portion of the windings wound around the bobbin 41A. As illustrated in Fig. 10, in the present embodiment, a winding layer of the primary-side winding is formed on the innermost side. Next, a winding layer of the secondary-side winding is formed. Then, a winding layer of the reset winding, which works as a primary-side winding, is formed on the outermost side. Thus, a sandwich winding is formed in which a winding layer of the secondary-side winding is sandwiched between winding layers of the primary-side winding.

Where, although the present embodiment includes a reset winding, the reset winding may not be provided depending on system conditions. In such a case, a primary-side winding may divided into two layers, and they are wound with a secondary-side winding sandwiched therebetween. Adopting sandwich winding results in that degree of bonding between the primary-side winding and the secondary-side winding is improved, thereby reducing leakage inductance that is generated in the secondary-side winding. For example, commutation speed is inversely proportional to the leakage inductance of the secondary side. For this reason, as the leakage inductance of the secondary-side winding decreases, the commutation operation can be performed at a higher speed. As a result of this, the boost open/close switch unit 22 can be switched at a higher speed (high-frequency switching is possible) and, for example, it is possible to make the most of, for example, devices made up of SiC, etc.

Embodiment 2

Although, in the above described embodiment, description has been made on a power conversion device that performs power conversion with the voltage boosting device 2 being the device to be subjected to commutation by the commutation device 4, and with voltage of the power source 1 being boosted, this is not limiting. Similar effects as described in each embodiment presented above can be achieved even in a power conversion device adopting a voltage varying device that can perform conversion of power to be supplied to the load 9 by varying voltage, etc. of, for example, a voltage dropping device and voltage boosting/dropping device in place of the voltage boosting device 2.

Embodiment 3

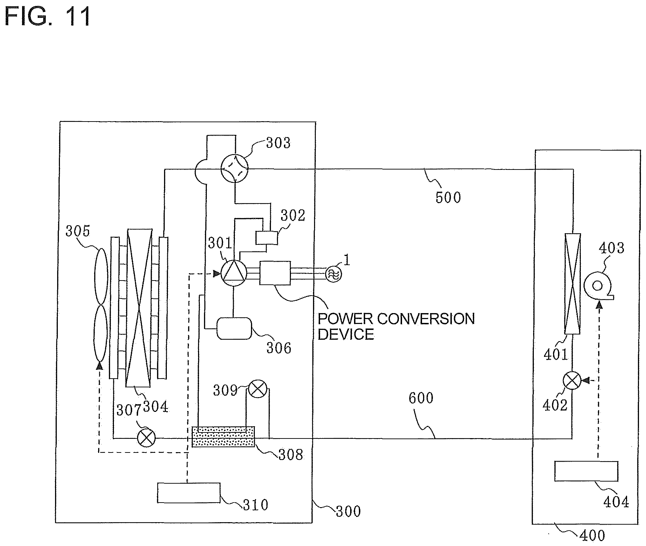

Fig. 11 is a configuration diagram of a refrigeration air-conditioning apparatus relating to Embodiment 3 of the present invention. In the present embodiment, a refrigeration air-conditioning apparatus that performs power supply via the above described power conversion device will be described. The refrigeration air-conditioning apparatus of Fig. 11 includes a heat source side unit (outdoor unit) 300 and a load side unit (indoor unit) 400, which are connected by refrigerant pipes, thus forming a dominant refrigerant circuit (hereafter, referred to as a "primary refrigerant circuit") in which refrigerant is recirculated. Of the refrigerant pipes, a pipe through which gaseous refrigerant (gas refrigerant) flows is denoted as gas pipe 500, and a pipe through which liquid refrigerant (may be of two-phase gas-liquid) is denoted as liquid pipe 600.

In the present embodiment, the heat source side unit 300 is made up of each device (unit) of: a compressor 301, an oil separator 302, a four-way valve 303, a heat source side heat exchanger 304, a heat source side fan 305, an accumulator 306, a heat source side throttle device (expansion valve) 307, an inter-refrigerant heat exchanger 308, a bypass expansion device 309, and a heat source side controller 310.

The compressor 301 compresses and discharges sucked refrigerant. Where, the compressor is supposed to be able to finely vary the capacity (the amount of refrigerant fed out per unit time) of the compressor 301 by freely varying the operation frequency. Further, the power conversion device described in each embodiment described above is installed between the power source 1 that supplies power to drive the compressor 301 (motor) and the compressor 301 that is supposed to be the load 9.

The oil separator 302 is supposed to separate lubricant oil that is mixed with the refrigerant and discharged from the compressor 301. The separated lubricant oil is returned to the compressor 301. The four-way valve 303 switches the flow of refrigerant according to during cooling operation and during heating operation based on the instruction from the heat source side controller 310. Moreover, the heat source side heat exchanger 304 performs heat exchange between the refrigerant and air (the air of outdoor). For example, it functions as an evaporator during heating operation, and performs heat exchange between the low pressure refrigerant that is flown in via a heat source side throttle device 307 and air, thereby evaporating and gasifying the refrigerant. Moreover, it functions as a condenser during cooling operation, and performs heat exchange between the refrigerant that is flown in from the four-way valve 303 side and is compressed in the compressor 301 and air, thereby condensing and liquefying the refrigerant. The heat source side heat exchanger 304 is provided with the heat source side fan 305 to efficiently perform heat exchange between refrigerant and air. The heat source side fan 305 may also be arranged such that power supply is performed via the power conversion device described in each embodiment described above and, for example, the rotational speed of the fan may be finely varied by freely varying the operation frequency of the fan motor in an inverter device that is the load 9.

The inter-refrigerant heat exchanger 308 performs heat exchange between the refrigerant that flows in a dominant flow path in the refrigerant circuit, and the refrigerant that is diverged from the flow path and is subjected to flow rate adjustment by a bypass expansion device 309 (expansion valve). It particularly aims to provide subcooled refrigerant to a load side unit when the refrigerant needs to be subcooled during cooling operation. The liquid that flows via the bypass expansion device 309 is returned to the accumulator 306 via a bypass pipe. The accumulator 306 is, for example, a unit for saving excess refrigerant that is liquid. The heat source side controller 310 is made up of, for example, a microcomputer, etc. It can perform wired or wireless communication with the load side controller 404, and for example, performs operation control of the entire refrigeration air-conditioning apparatus by controlling each instrument (unit) relating to the refrigeration air-conditioning apparatus, such as operation frequency control of the compressor 301 through inverter circuit control based on data relating to sensing of various sensing unit (sensor) in the refrigeration air-conditioning apparatus. Moreover, the heat source side controller 310 may also be arranged to perform the processing performed by the controller 100 in each embodiment described above.

On the other hand, the load side unit 400 is made up of a load side heat exchanger 401, a load side throttle device (expansion valve) 402, a load side fan 403, and a load side controller 404. For example, the unit functions as a condenser during heating operation, and performs heat exchange between refrigerant that flows in from a gas pipe 500 and air, thereby condensing the refrigerant into a liquid (or two-phase gas-liquid) to be flown out to the liquid pipe 600 side. On the other hand, the unit functions as an evaporator during cooling operation, and performs heat exchange between refrigerant that is put into a low pressure state by the load side throttle device 402 and air, thereby causing the refrigerant to take away the heat of air, to be vaporized into a gas, and to be flown out to the gas pipe 500 side. Moreover, the load side unit 400 is provided with a load side fan 403 for adjusting the flow of air for performing heat exchange. The operation speed of the load side fan 403 is determined by, for example, user's setting. The load side throttle device 402 is provided to adjust the pressure of refrigerant within the load side heat exchanger 401 by varying the opening degree thereof.

Further, the load side controller 404 is also made up of a microcomputer, etc. and can perform wired or wireless communication with, for example, the heat source side controller 310. It controls each device (unit) of the load side unit 400, for example, such that the indoor is kept at a predetermined temperature based on instruction from the heat source side controller 310, instruction from a resident, etc. Further, it transmits a signal including data relating to sensing of the sensing unit provided in the load side unit 400.

As so far described, in the refrigeration air-conditioning apparatus of Embodiment 3, since power supply to the compressor 301 and the heat source side fan 305, etc. is performed by using the power conversion device in each embodiment described above, it is possible to achieve a refrigeration air-conditioning apparatus that is highly efficient, highly reliable, and energy saving.

Industrial Applicability of Invention

In Embodiment 3 described above, although description has been made on a case in which the power conversion device relating to the present invention is applied to the refrigeration air-conditioning apparatus, this will not limit the invention. The present invention can be applied to heat pump apparatuses; apparatuses that utilize a refrigeration cycle (heat pump cycle), such as refrigerators; conveying instruments such as elevators; lighting equipment (system); hybrid vehicles; power conditioners by solar power generation; and others.

Reference Signs List

1 power supply 2 voltage boosting device 3 smoothing device 4 commutation device 5 voltage detection device 7 drive signal transmission device 8 commutation signal transfer device 9 load 10 current detection element 11 current detection device 21 magnetic energy storage unit 22 boost open/close switch unit 23 boost rectification unit 41 transformer 41A bobbin 41B pin 41C interlayer insulation tape 41D outer layer insulation tape 41E barrier tape 42 commutation rectification unit 43 transformer drive circuit 44 commutation switch 45 transformer power source unit 46 transformer drive rectification unit 47 transformer smoothing unit 100 controller 300 heat source side unit 301 compressor 302 oil separator 303 four-way valve 304 heat source side heat exchanger 305 heat source side fan 306 accumulator 307 heat source side throttle device 308 inter-refrigerant heat exchanger 309 bypass expansion device 310 heat source side controller 400 load side unit 401 load side heat exchanger 402 load side throttle device 403 load side fan 404 load side controller 500 gas pipe 600 liquid pipe

**Claims**

1. A power conversion device configured to convert electric power from a power source (1) to a load (9), comprising:

   a voltage changing device (2) including a rectification unit (23) configured to prevent backflow of a current from a side of the load (9) to a side of the power source, the voltage changing device (2) being configured to change a voltage of power from the power source (1) to a predetermined voltage; and
   a commutation device (4) including a transformer (41) and configured to perform commutation operation, in the commutation operation, the transformer (41) applying a voltage induced by a current flowing through a primary-side winding to a secondary-side winding, which is,on an other path different from that for the voltage changing device (2),
   wherein, the transformer (41) includes at least three winding layers, in which a winding layer of the secondary-side winding is formed between winding layers of the primary-side winding, and,
   the secondary-side winding of the transformer (41) is wound as a space winding, wherein an inter-winding distance (d) between adjacent turns in the winding layer of the space winding is being increased relative to the inter-winding distance between adjacent turns in the winding layer of the primary side-winding such that the inter-winding distance of each of the turns constituting the space winding is uniform.

**2.** The power conversion device of claim 1, wherein
the primary-side winding of the transformer (41) is provided with a reset winding.

**3.** The power conversion device of claim 2, wherein
an outermost winding layer and an innermost winding layer are composed of a winding layer of the primary-side winding or a winding layer of the reset winding.

**4.** The power conversion device of any one of claims 1 to 3, wherein
the transformer (41) is a pulse transformer.

**5.** The power conversion device of any one of claims 1 to 4, wherein the voltage changing device (2) includes an open/close switch unit (22) configured to change voltage by switching, and is configured to cause the commutation device (4) to start the commutation operation before the open/close switch unit (22) is closed.

**6.** The power conversion device of any one of claims 1 to 5, wherein the voltage changing device (2) includes a magnetic energy storage unit (21) including a reactor.

**7.** The power conversion device of any one of claims 1 to 6,
wherein the voltage changing device (2) includes an open/close switch unit (22) configured to change voltage by switching, and
wherein the open/close switch unit (22) includes an insulated gate bipolar transistor or a metal oxide semiconductor field effect transistor.

**8.** The power conversion device of any one of claims 1 to7, wherein the rectification unit (23) includes a rectifier.

**9.** A refrigerating and air-conditioning apparatus, comprising the power conversion device of any one of claims 1 to 8 configured to drive at least one of a compressor (301) or an air-sending device (305).

**Patentansprüche**

**1.** Leistungswandlervorrichtung, die zum Umwandeln elektrischer Leistung von einer Leistungsquelle (1) zu einer Last (9) ausgelegt ist, umfassend:

eine Spannungsänderungsvorrichtung (2) enthaltend eine Gleichrichteinheit (23), die zum Verhindern von Rückfluss eines Stroms von einer Seite der Last (9) zu einer Seite der Leistungsquelle ausgelegt ist, wobei die Spannungsänderungsvorrichtung (2) zum Ändern einer Spannung von Leistung von der Leistungsquelle (1) zu einer vorbestimmten Spannung ausgelegt ist; und
eine Kommutierungsvorrichtung (4), enthaltend einen Transformator (41) und zum Durchführen eines Kommutierungsbetriebs ausgelegt, wobei der Transformator (41) im Kommutierungsbetrieb eine Spannung, die durch einen durch eine primärseitige Wicklung fließenden Strom induziert wird, an eine sekundärseitige Wicklung anlegt, die sich auf einem anderen Pfad als dem für die Spannungsänderungsvorrichtung (2) befindet,
wobei der Transformator (41) mindestens drei Wicklungslagen beinhaltet, worin eine Wicklungslage der sekundärseitigen Wicklung zwischen Wicklungslagen der primärseitigen Wicklung ausgebildet ist, und
die sekundärseitige Wicklung des Transformators (41) als eine Raumwicklung gewickelt ist, wobei ein Zwischenwicklungsabstand (d) zwischen benachbarten Windungen in der Wicklungslage der Raumwicklung in Bezug auf den Zwischenwicklungsabstand zwischen benachbarten Windungen in der Wicklungslage der primärseitigen Wicklung erhöht wird, so dass der Zwischenwicklungsabstand jeder der Windungen, die die Raumwicklung bilden, einheitlich ist.

**2.** Leistungswandlervorrichtung nach Anspruch 1, wobei die primärseitige Wicklung des Transformators (41) mit einer Rückstellwicklung versehen ist.

**3.** Leistungswandlervorrichtung nach Anspruch 2, wobei eine äußerste Wicklungslage und eine innerste Wicklungslage aus einer Wicklungslage der primärseitigen Wicklung oder einer Wicklungslage der Rückstellwicklung zusammengesetzt sind.

**4.** Leistungswandlervorrichtung nach einem der Ansprüche 1 bis 3, wobei

der Transformator (41) ein Impulstransformator ist.

5. Leistungswandlervorrichtung nach einem der Ansprüche 1 bis 4, wobei die Spannungsänderungsvorrichtung (2) eine Auf/Zu-Schalteinheit (22) beinhaltet, die zum Ändern der Spannung durch Schalten ausgelegt ist, und so ausgelegt ist, dass sie bewirkt, dass die Kommutierungsvorrichtung (4) den Kommutierungsbetrieb startet, bevor die Auf/Zu-Schalteinheit (22) geschlossen wird.

6. Leistungswandlervorrichtung nach einem der Ansprüche 1 bis 5, wobei die Spannungsänderungsvorrichtung (2) eine magnetische Energiespeichereinheit (21) mit einer Spule beinhaltet.

7. Leistungswandlervorrichtung nach einem der Ansprüche 1 bis 6,
wobei die Spannungsänderungsvorrichtung (2) eine Auf/Zu-Schalteinheit (22) beinhaltet, die zum Ändern der Spannung durch Schalten ausgelegt ist, und
wobei die Auf/Zu-Schalteinheit (22) einen Bipolartransistor mit isoliertem Gate oder einen Metalloxid-Halbleiter-Feldeffekttransistor beinhaltet.

8. Leistungswandlervorrichtung nach einem der Ansprüche 1 bis 7, wobei die Gleichrichteinheit (23) einen Gleichrichter beinhaltet.

9. Kühl- und Klimagerät, umfassend die Leistungswandlervorrichtung nach einem der Ansprüche 1 bis 8, die zum Betreiben mindestens eines aus einem Kompressor (301) oder einer Luftsendevorrichtung (305) ausgelegt ist.

**Revendications**

1. Dispositif de conversion de puissance configuré pour convertir une énergie électrique qui provient d'une source d'énergie (1) en une charge (9), qui comprend :

   un dispositif de changement de tension (2) qui comprend une unité de rectification (23) configurée pour empêcher tout retour d'un courant d'un côté de la charge (9) vers un côté de la source d'énergie, le dispositif de changement de tension (2) étant configuré pour changer une tension d'une puissance provenant de la source d'énergie (1) en une tension prédéterminée ; et
   un dispositif de communication (4) qui comprend un transformateur (41) et configuré pour effectuer une opération de commutation, pendant l'opération de commutation, le transformateur (41) appliquant une tension induite par un courant qui circule dans un enroulement de côté primaire vers un enroulement de côté secondaire, qui se trouve sur un autre trajet différent de celui destiné au dispositif de changement de tension (2),
   dans lequel le transformateur (41) comprend au moins trois couches d'enroulements, dans lesquelles une couche d'enroulement de l'enroulement de côté secondaire est formée entre les couches d'enroulement de l'enroulement de côté primaire, et
   l'enroulement de côté secondaire du transformateur (41) est enroulé comme un enroulement d'espace, dans lequel une distance inter-enroulements (d) entre les tours adjacents au sein de la couche d'enroulement de l'enroulement d'espace est augmentée par rapport à la distance inter-enroulements entre les tours adjacents dans la couche d'enroulement de l'enroulement de côté primaire de sorte que la distance inter-enroulements de chacun des tours qui constituent l'enroulement d'espace soit uniforme.

2. Dispositif de conversion de puissance selon la revendication 1, dans lequel l'enroulement de côté primaire du transformateur (41) est muni d'un enroulement de réinitialisation.

3. Dispositif de conversion de puissance selon la revendication 2, dans lequel une couche d'enroulement la plus externe et une couche d'enroulement la plus interne sont composées d'une couche d'enroulement de l'enroulement de côté primaire ou d'une couche d'enroulement de l'enroulement de réinitialisation.

4. Dispositif de conversion de puissance selon l'une quelconque des revendications 1 à 3, dans lequel le transformateur (41) est un transformateur d'impulsions.

5. Dispositif de conversion de puissance selon l'une quelconque des revendications 1 à 4, dans lequel le dispositif de changement de tension (2) comprend une unité de commutateur d'ouverture/de fermeture (22) configurée pour changer la tension par commutation, et est configuré pour permettre au dispositif de commutation (4) de déclencher l'opération de commutation avant que l'unité de commutateur d'ouverture/de fermeture (22) soit fermée.

6. Dispositif de conversion de puissance selon l'une quelconque des revendications 1 à 5, dans lequel le dispositif de changement de tension (2) comprend une unité de stockage d'énergie magnétique (21) qui comprend un réacteur.

7. Dispositif de conversion de puissance selon l'une quelconque des revendications 1 à 6,
dans lequel le dispositif de changement de tension (2) comprend une unité de commutateur d'ouverture/de fermeture (22) configurée pour changer la tension par commutation, et
dans lequel l'unité de commutateur d'ouverture/de fermeture (22) comprend un transistor bipolaire à porte isolée ou un transistor à effet de champ à semi-conducteur en oxyde de métal.

8. Dispositif de conversion de puissance selon l'une quelconque des revendications 1 à 7, dans lequel l'unité de rectification (23) comprend un redresseur.

9. Appareil de réfrigération et de climatisation, comprenant le dispositif de conversion de puissance selon l'une quelconque des revendications 1 à 8 configuré pour entraîner au moins l'un d'un compresseur (301) ou d'un dispositif d'envoi d'air (305).

FIG. 1

FIG. 2

## FIG. 3

## FIG. 4

## FIG. 5

## FIG. 6

FIG. 7

$C_{L2c}$  $C_{L2a}$

SECONDARY-SIDE
WINDING OF TRANSFORMER 41

$C_{L2b}$

FIG. 8

$C_{D2}$  $V C_{D2}$

$C_{L2}$  $V C_{L2}$

## FIG. 9

SECONDARY-SIDE WINDING

4 1

## FIG. 10

PRIMARY-SIDE WINDING

SECONDARY-SIDE WINDING

RESET WINDING

4 1

FIG. 11

POWER CONVERSION DEVICE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012137258 A1

- US 2005160284 A